# EUROPÄISCHE PATENTSCHRIFT

(11) **EP 0 828 578 B1**
(45) Veröffentlichungstag und Bekanntmachung des Hinweises auf die Patenterteilung: **28.02.2001**
(21) Anmeldenummer: 96919774.8
(22) Anmeldetag: 14.05.1996
(51) Int. Cl.: B22F 1/00, B22F 9/20, C22B 23/00, H01M 4/38, H01M 4/52

(54) **KOBALTMETALLAGGLOMERATE, VERFAHREN ZU IHRER HERSTELLUNG SOWIE DEREN VERWENDUNG**
COBALT METAL AGGLOMERATES, A METHOD OF PRODUCING THEM AND THEIR USE
AGGLOMERATS DE COBALT METALLIQUE, LEUR PROCEDE DE FABRICATION ET LEUR APPLICATION

(30) Priorität: 26.05.1995 DE 19519331
(43) Veröffentlichungstag der Anmeldung: 18.03.1998
(73) Patentinhaber: H.C. Starck GmbH & Co. KG, 38642 Goslar (DE)
(72) Erfinder: GÖRGE, Astrid, D-38640 Goslar (DE); MEESE-MARKTSCHEFFEL, Juliane, D-38642 Goslar (DE); NAUMANN, Dirk, D-38667 Bad Harzburg (DE); OLBRICH, Armin, D-38723 Seesen (DE); SCHRUMPF, Frank, D-38640 Goslar (DE)
(74) Vertreter: Drope, Rüdiger, Dr.
(86) Internationale Anmeldenummer: EP9602049
(87) Internationale Veröffentlichungsnummer: WO9637324

(56) Entgegenhaltungen:
- DE-C- 4 343 594
- US-A- 4 093 450
- PMAI NEWS LETTER, Bd. 4, Nr. 4, September 1979, Seiten 17-21, XP000600537 KAMESWARI: "Preparation and Characterization of fine Cobalt metal and Oxide Powders"

## Beschreibung

Die vorliegende Erfindung betrifft Kobaltmetallagglomerate, bestehend aus erdnußförmigen Primärteilchen, Verfahren zu ihrer Herstellung sowie deren Verwendung.

Feinteiliges Kobaltmetall wird hauptsächlich als Binder bei der Herstellung von Hartmetall- und Schneidwerkzeugen auf Basis verschiedener Hartstoffe, wie z.B. WC, Diamant, SiC und CBN eingesetzt. Dabei müssen die z.B. in der Diamantwerkzeugherstellung eingesetzten Kobaltmetalle spezielle Anforderungen erfüllen. Diese sehen zum einem vor, daß Verunreinigungen wie Al, Ca, Mg, S und Si vermieden werden sollten, da diese Elemente leicht mit dem Restsauerstoff des Kobaltmetallpulvers stabile Oxide bilden und somit eine unerwünschte Porosität in den Segmenten verursachen.

Zum anderen ist es erforderlich, speziell bei der Herstellung von Segmenten mit synthetischen Diamanten, nur sehr sinteraktives Kobaltmetallpulver einzusetzen, da hier Mindestdichten von 8,5 g/cm³ gefordert werden. Diese Dichten sollten bereits in einem Temperaturbereich < 900°C erzielt werden, da bei höheren Temperaturen eine Umwandlung des Diamanten zu Graphit erfolgen kann. Besitzt das Kobaltmetall keine ausreichende Sinteraktivität, werden nicht die erforderlichen Härten erreicht. Dies führt bei der extremen Beanspruchung von Bohrkronen oder Schneidwerkzeugen durch die abrasive Wirkung des Gesteinstaubes zu tiefen Auskolkungen, welche ein unerwünschtes Ausbrechen der Diamanten oder anderer Hartstoffe und damit den Verlust der Schneidleistung nach sich ziehen.

Nach dem Stand der Technik werden Kobaltmetalle zum einem in Form von Mischungen aus verdüsten Kobaltmetallpulvern mit wasserstoffreduzierten Pulvern eingesetzt, wie sie in der DE-A 4 343 594 offenbart sind, zum anderen als Kobaltmetallpulver der Qualität ultrafein und extrafein.

Ultrafeine Pulver unterscheiden sich aufgrund ihres FSSS-Wertes von < 1,0 µm von den extrafeinen Pulvern, deren FSSS-Werte zwischen 1,2-1,4 µm liegen.

Bedingt durch die geringen Teilchengrößen und die daraus resultierenden großen Oberflächen wird bei den beschriebenen Kobaltmetallpulvern die Aufnahme von Luftsauerstoff und Feuchtigkeit begünstigt, was häufig zu einer Verschlechterung der Fließfähigkeit der Pulver führt.

Es war daher Aufgabe der vorliegenden Erfindung, ein sinteraktives Kobaltmetall zur Verfügung zu stellen, welches die erwähnten Nachteile nicht aufweist, aber die Herstellung von Segmenten mit hoher Dichte und Härte gewährleistet.

Pmai Newsletters, Bd. 4, Nr. 4, Sept. 1979, S. 17-21, beschreibt die Herstellung von sehr feinem Kobaltpulver mit einer Größe der Primärteilchen < 0,3 µm. Das Pulver wird ausgehend von Kobaltchlorid, - nitrat oder - sulfat auf dem Weg über Kobalthydroxid und Kobaltoxid, sowie durch Reduzieren des Kobaltoxids in Wasserstoff in Form von Agglomerat erhalten. Die Sekundärstruktur des Agglomerats und dessen Fließvermögen und Schüttdichte sind nicht ersichtlich.

Es konnte nun ein Kobaltmetallpulver bereitgestellt werden, das die geforderten Eigenschaften aufweist.

Es handelt sich hierbei um Kobaltmetallagglomerate, bestehend aus erdnußförmigen Primärteilchen, die mittlere Teilchengrößen im Bereich von 0,1 bis 0,7 µm aufweisen. Diese Kobaltagglomerate sind Gegenstand dieser Erfindung. Sie weisen eine sphärische Sekundärstruktur mit mittleren Agglomeratdurchmessern von 3 bis 50 µm, bevorzugt 5 bis 20 µm auf. Aufgrund ihrer sphärischen Sekundärstruktur zeichnen sie sich durch ein gutes Fließverhalten aus.

Die ungleichmäßig länglich geformten Primärpartikel weisen bevorzugt eine mittlere Teilchenlänge von 0,5 bis 1 µm und im allgemeinen einen Durchmesser von < 0,5 µm auf.

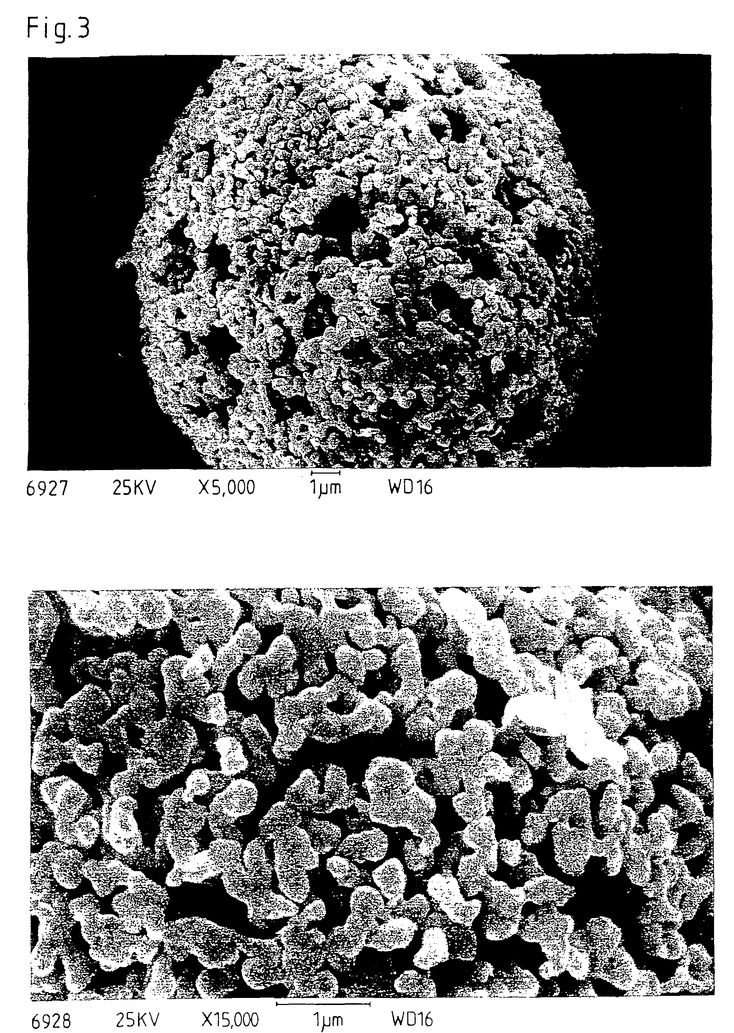

Fig. 3 zeigt rasterelektronenmikroskopische Aufnahmen der erfindungsgemäßen Kobaltmetallpulveragglomerate, hergestellt nach Beispiel 3 in 5 000- und 15 000-facher Vergrößerung.

Die spezifischen Oberflächen der erfindungsgemäßen Kobaltmetallagglomerate (bestimmt nach der Stickstoff-1-Punkt-Methode gemäß DIN 66 131) betragen bevorzugt 2 bis 6 cm²/g. Diese Oberflächen und die geringen Teilchengrößen der Primärteilchen sind verantwortlich für die hohe Sinteraktivität der erfindungsgemäßen Kobaltmetallagglomerate, aus denen bereits bei Temperaturen von 700°C Sinterkörper mit Dichten von 8,5 g/cm³ erzielt werden können.

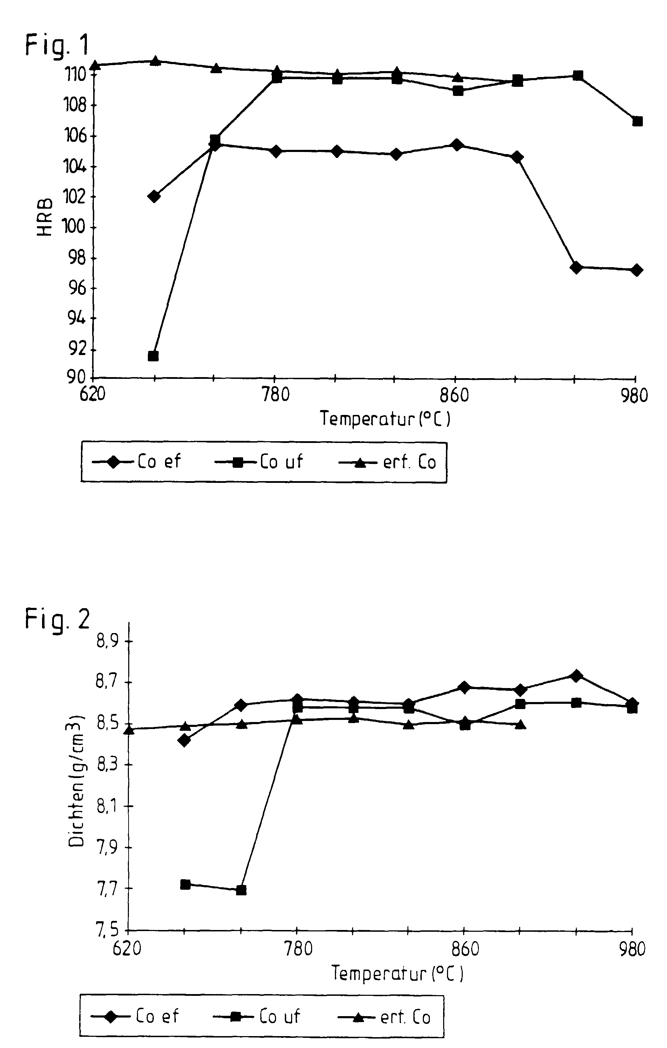

Figur 2 und Tabelle 2 zeigen die Dichten eines Sinterkörpers, hergestellt aus dem erfindungsgemäßen Kobaltmetallpulveragglomerat nach Beispiel 3, im Vergleich zu Sinterkörpern, hergestellt aus kommerziell erhältlichen ultra- und extrafeinen Kobaltmetallpulvern, in Abhängigkeit von der Sintertemperaturen.

Schon bei nur bis 620°C heißgepreßten Segmenten, lassen sich bereits Härten von 110 HR_{B} erreichen. Diese Härten zählen zu den höchsten bisher erreichten Werten. Mit Kobaltmetallpulvern gemäß dem Stand der Technik werden für HR_{B}-Werte von 110 Sintertemperaturen von ca. 780°C benötigt. Figur 1 und Tabelle 1 zeigen die Härten eines Sinterkörpers, hergestellt aus dem erfindungsgemäßen Kobaltmetallpulveragglomerat, im Vergleich zu Sinterkörpern, hergestellt aus kommerziell erhältlichen ultra- und extrafeinen Kobaltmetallpulvern, in Abhängigkeit von den Sintertemperaturen. Es ist deutlich zu erkennen, daß man mit dem erfindungsgemäßen Kobaltmetallpulveragglomerat schon bei Sintertemperaturen von 620°C hohe Härten erzielt werden, die zudem über den gesamten Temperaturbereich bis 900°C konstant bleiben. Dieses ermöglicht dem Hersteller von Hartstoffverbund-Sinterschneid- und Bohrwerkzeugen größte Spielräume für die Produktion, ohne eine Veränderung der Qualität durch geänderte Härten des Kobaltbinders befürchten zu müssen.

Gegenstand der Erfindung ist auch ein Verfahren zur Herstellung der erfindungsgemäßen Kobaltmetallagglomerate.

Das Verfahren ist dadurch gekennzeichnet, daß in einem ersten Schritt, bevorzugt in einem kontinuierlich betriebenen Durchflußrührreaktor unter starkem Rühren, eine wäßrige Kobalt(II)-Salzlösung der allgemeinen Formel CoX₂, wobei X⁻ = Cl⁻, NO₃⁻ und/oder 1/2 SO₄²⁻, mit wäßrigen Lösungen oder Suspensionen von Alkali- und/oder Ammoniumcarbonaten und/oder -hydrogencarbonaten umgesetzt wird. Der Temperaturbereich für die Umsetzung liegt dabei zwischen 40 und 100°C, bevorzugt zwischen 60 und 90°C. Hierbei entsteht nun im Gegensatz zu den üblichen Fällverfahren kein stäbchenförmig kristallisiertes Kobaltcarbonat, sondern ein sphärisches basisches Kobaltcarbonat. Dieses wird filtriert und neutralsalzfrei gewaschen. Das so erhaltene basische Kobaltcarbonat wird in einem weiteren Verfahrensschritt unter Erhaltung der Sekundärmorphologie durch Zugabe von Alkalilaugen in sphärisches Kobalt(II)hydroxid überführt und anschließend mit geeigneten Oxidationsmitteln zum Kobalt(III)oxidhydroxid, Heterogenit, CoO(OH) oxdiert. Als Oxidationsmittel eignen sich Hypochlorite, Peroxodisulfate, Peroxide u.ä. Überraschend wurde nun gefunden, daß die Oxidation des Kobalt(II)hydroxids zum Heterogenit mit einer Verringerung der Primärteilchengröße unter vollkommenem Erhalt der Sekundärmorphologie einhergeht. Diese feine Primärteilchengröße von 0,3 bis 1,0 µm bleibt bei der anschließenden Reduktion des Heterogenits zum Kobaltmetall über weite Temperaturbereiche von 300 bis 800°C erhalten. Bevorzugt werden gasförmige Reduktionsmittel wie Wasserstoff, Methan, Distickstoffoxid oder Kohlenmonoxid bei Ofentemperaturen von 350 bis 650°C eingesetzt.

Im Gegensatz zu den üblichen bekannten extrafeinen und ultrafeinen Kobaltpulvern weisen die erfindungsgemäßen Kobaltmetallagglomerate aufgrund ihrer sphärischen Sekundärstruktur ein sehr gutes Fließverhalten auf.

Aufgrund der beschriebenen Eigenschaften eignen sich die erfindungsgemäßen Kobaltmetallpulver besonders als Binder bei der Hartmetall- und/oder Diamantwerkzeugherstellung. Es ist zu bemerken, daß die erfindungsgemäßen Kobaltmetallpulveragglomerate hierbei vorteilhaft sowohl allein als auch in Kombination mit anderen Bindermetallen eingesetzt werden können.

Gegenstand dieser Erfindung sind somit die Verwendung der erfindungsgemäßen Kobaltmetallagglomerate zur Herstellung von Kobalt-Sinterkörpern sowie zur Herstellung von Verbundsinterkörpern auf Basis von Kobaltmetall und Hartstoffen aus der Gruppe Diamant, CBN, WC, SiC und Al₂O₃.

Aufgrund der guten Fließeigenschaften und der feinen Primärstruktur der erfindungsgemäßen Kobaltmetallpulveragglomerate eignen sie sich auch in besonderer Weise zur Einarbeitung in die positive nickelhydroxidhaltige Elektrodenmasse wiederaufladbarer Battterien, basierend auf Nickel-Cadmium- bzw. Nickel-Metallhydrid-Technologien.

In den sogenannten Formierzyklen wird das Kobaltmetall entsprechend seinem Potential zunächst zu Kobalt(II) oxodiert. Dieses bildet im alkalischen Elektrolyten (30 %ige KOH-Lösung) lösliche Kobaltate(II) und wird so gleichmäßig in der Elektrodenmasse verteilt. Bei weiterer Ladung wird es letztendlich als elektrisch leitfähige CoO(OH)-Schicht auf den Nickelhydroxid-Partikeln abgeschieden und bewirkt so erst die gewünschte hohe Massenausnutzung des Nickelhydroxids im Akkumulator. Die beschriebene anodische Auflösung des Kobaltmetallpulvers verläuft naturgemäß umso schneller und effektiver, je feiner die Primärstuktur bzw. je größer die Oberfläche des Metallpulvers ist.

Gegenstand dieser Erfindung ist somit auch die Verwendung der erfindungsgemäßen Kobaltmetallagglomerate als Komponente zur Herstellung der positiven Elektroden in alkalischen Sekundärbatterien auf Nickel-Cadmium- oder Nickel-Metallhydrid-Technologien.

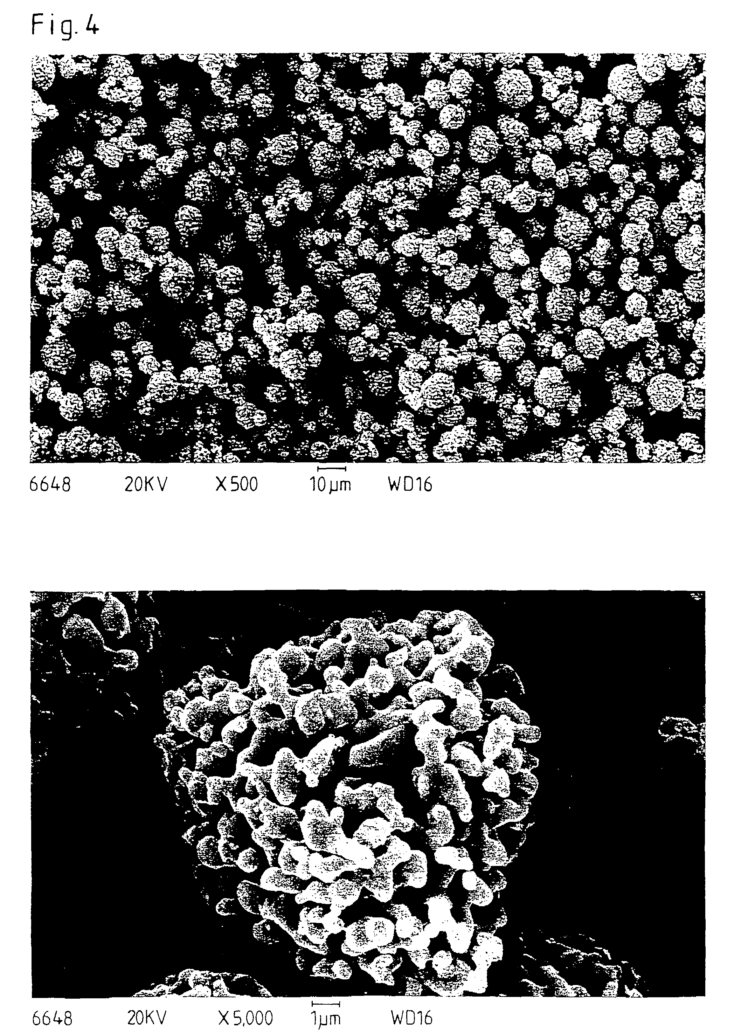

Im folgenden wird die Erfindung beispielhaft sowie an Hand der Zeichnung erläutert, ohne daß hierin eine Einschränkung zu sehen ist. In der Zeichnung zeigen die Fig. 1 und 2 Eigenschaften des erfindungsgemäßen Agglomerats in Vergleich mit denjenigen bekannten Agglomerats und die Fig. 3 und 4 rasterelektronische Aufnahmen des erfindungsgemäßen Agglomerats, jeweils in den Vergrößerungen 1 : 5000 und 1 : 15000.

### Beispiel

### Abschnitt 1

In einem Durchflußrührreaktor wurden 20 l Wasser vorgelegt und auf 80°C erhitzt. Hierzu wurden 5 l/h einer 1,7 molaren CoCl₂-Lösung sowie 19 l/h einer 0,9 molaren NaHCO₃-Lösung unter kräftigem Rühren kontinuierlich eindosiert. Nach Erreichen des stationären Zustandes wurde aus dem Überlauf des Reaktors das entstandene Produkt abgezogen, filtriert und mit Wasser neutralsalzfrei gewaschen. Hiernach wurde bei T = 80°C bis zur Gewichtskonstanz getrocknet.

Das so erhaltene basische Kobaltcarbonat zeigte in der chemischen Analyse einen Co-Gehalt von 54,3 %, der Gehalt des Carbonates wurde mit 32,3 % bestimmt.

### Abschnitt 2

500 g basisches Kobaltcarbonat, hergestellt gemäß Abschnitt 1, wurden in 2 l Wasser suspendiert. Diese Suspension wurde unter kräftigem Rühren mit 200 g NaOH, gelöst in 1,5 l Wasser, versetzt, auf 60°C erhitzt und 1 h gerührt. Es wurde filtriert und mit 3 warmem Wasser gewaschen. Der noch feuchte Filterkuchen wurde erneut in 2 l Wasser suspendiert und innerhalb 1,5 h mit 700 ml H₂O₂ (30 %ig) bei einer Temperatur von 45°C oxidiert. Nach beendeter Zugabe wurde noch 0,5 h weitergerührt, anschließend filtriert, mit 2 l warmem Wasser nachgewaschen und bei 80°C bis zur Gewichtskonstanz getrocknet. Man erhielt 420 g sphärisch agglomerierten Heterogenit mit einem D₅₀-Wert der Agglomerate von 10,5 µm. Der Kobaltgehalt wurde zu 63,9 % analysiert.

### Abschnitt 3

200 g sphärisch agglomerierter Heterogenit, hergestellt gemäß Abschnitt 2, wurden in ein Quarzschiffchen eingewogen und 3 h bei T = 450°C im Wasserstoffstrom reduziert. Man erhielt 131 g sphärisch agglomeriertes Kobaltmetallpulveragglomerat. Fig 3 zeigt hiervon rasterelektronische Aufnahmen in 5 000- und 15 000-facher Vergrößerung. Der D₅₀-Wert des Kobaltmetallpulvers betrug 10,5 µm. Der FSSS-Wert betrug 0,62 µm.

### Sintertests

Die nach Abschnitt 3 des Beispiels erhaltenen Kobaltmetallagglomerate wurden unter folgenden Bedingungen Heißpreßtests unterworfen:

| | |
|---|---|
| Eingesetzte Apparatur | DSP 25-ATV (Fa. Dr. Fritsch GmbH) |
| Aufheizzeit auf Endtemp. | 3 min |
| Haltezeit | 3 min |
| Enddruck | 350 N/mm² |
| Endtemperatur | siehe Tabelle 1 und 2 |
| Abmessungen | 40 x 4 x 10 mm |

Tabelle 1 und Figur 1 zeigen die Härten eines Sinterkörpers, hergestellt aus dem erfindungsgemäßen Kobaltmetallpulveragglomerat aus Abschnitt 3 des Beispiels, im Vergleich zu Sinterkörpern, hergestellt aus kommerziell erhältlichen ultra- und extrafeinen Kobaltmetallpulvern, in Abhängigkeit von den Sintertemperaturen. Man erkennt deutlich, daß mit dem erfindungsgemäßen Kobaltmetallpulver schon bei Sintertemperaturen von 620°C hohe Härten erzielt werden, die zudem über den gesamten Temperaturbereich bis 980°C konstant bleiben.

**Tabelle 1:**

| (Härten) | | | | | |
|---|---|---|---|---|---|
| Rockwell-Härten (HR_{B}) | | | | | |
| | 620°C | 700°C | 780°C | 900°C | 980°C |
| Co UF¹⁾ | | 91,5 | 109,8 | 109,7 | 107 |
| Co eF²⁾ | | 102,5 | 105,0 | 104,6 | 97,2 |
| Kobaltmetallpulveragglomerat aus Beispiel, Abschnitt 3 | 110,6 | 110,9 | 110,1 | 110,5 | |

| | | | | | |
|---|---|---|---|---|---|
| ¹⁾ Kobaltmetallpulver ultrafein ex Fa. Eurotungstene Grenoble, Frankreich | | | | | |
| ²⁾ Kobaltmetallpulver extrafein ex Fa. Hoboken Overpelt, Belgien | | | | | |

Tabelle 2 und Figur 2 zeigen die Dichten eines Sinterkörpers, hergestellt aus dem erfindungsgemäßen Kobaltmetallpulveragglomerat aus Abschnitt 3 des Beispiels, im Vergleich zu Sinterkörpern, hergestellt aus kommerziell erhältlichen ultra- und extrafeinen Kobaltmetallpulvern, in Abhängigkeit von den Sintertemperaturen.

**Tabelle 2:**

| (Dichten) | | | | | |
|---|---|---|---|---|---|
| Dichten [g/cm³] | | | | | |
| | 620°C | 700°C | 800°C | 900°C | 980°C |
| Co uF¹⁾ | | 7,72 | 8,58 | 8,60 | 8,59 |
| Co eF²⁾ | | 8,42 | 8,62 | 8,67 | 8,61 |
| Kobaltmetallpulveragglomerat aus Beispiel, Abschnitt 3 | 8,47 | 8,49 | 8,53 | 8,50 | |

In der Tabelle 3 sind Teilchengrößen und spezifische BET-Oberflächen der Kobaltmetallagglomerate (bestimmt nach der Stickstoff-1-Punkt-Methode gemäß DIN 66 131) aus Abschnitt 3 des Beispiels denen kommerziell erhältlicher ultra- und extrafeiner Kobaltpulver gegenübergestellt.

**Tabelle 3:**

| (Teilchengröße und spezifische Oberflächen) | | |
|---|---|---|
| | FSSS [µm] | BET [cm²/g] |
| Co uF¹⁾ | < 1 | 1,4 |
| Co eF²⁾ | 1,2 - 1,4 | 0,8 - 1,0 |
| Kobaltmetallpulveragglomerat aus Beispiel, Abschnitt 3 | < 0,7 | 2,8 - 4,0 |

## Patentansprüche

1. Kobaltmetallagglomerate mit sphärischer Sekundärstruktur mit mittlerem Agglomeratdurchmesser von 3 bis 50 µm, bestehend aus erdnussförmigen Primärteilchen, die mittlere Teilchengrößen im Bereich von 0,1 bis 0,7 µm aufweisen.

2. Kobaltmetallagglomerate gemäß Anspruch 1, dadurch gekennzeichnet, dass die Agglomeratdurchmesser 5 bis 20 µm betragen.

3. Kobaltmetallagglomerate gemäß Anspruch 1 oder 2, dadurch gekennzeichnet, dass sie eine spezifische Oberfläche im Bereich von 2 bis 6 m²/g aufweisen.

4. Verfahren zur Herstellung der Kobaltmetallagglomerate gemäß einem oder mehreren der Ansprüche 1 bis 3, dadurch gekennzeichnet, dass Kobaltsalze der allgemeinen Formel CoX₂, wobei X⁻ = Cl⁻, NO₃⁻ und/oder 1/2 SO₄²⁻ bedeutet, kontinuierlich mit wässrigen Lösungen oder Suspensionen von Alkali- und/oder Ammoniumcarbonaten und/oder -hydrogencarbonaten bei Temperaturen zwischen 40 und 100°C, bevorzugt 60 und 90°C, unter der Bildung von basischem Kobaltcarbonat umgesetzt, dieses abgetrennt und neutralsalzfrei gewaschen, anschließend mit Alkali- und/oder Ammoniumlaugen umgesetzt, mittels Oxidationsmittel zum dreiwertigen Heterogenit CoO(OH) oxidiert und dieser mit Reduktionsmitteln zu den Kobaltmetallagglomeraten reduziert wird.

5. Verfahren gemäß Anspruch 4, dadurch gekennzeichnet, dass als Oxidationsmittel bevorzugt H₂O₂ eingesetzt wird.

6. Verfahren gemäß Anspruch 4 oder 5, dadurch gekennzeichnet, dass die Umsetzung mit gasförmigen Reduktionsmitteln bei Temperaturen zwischen 300 und 800°C, bevorzugt 350 bis 650°C, durchgeführt wird.

7. Verwendung der Kobaltmetallagglomerate gemäß einem oder mehreren der Ansprüche 1 bis 6 zur Herstellung von Kobalt-Sinterkörpern.

8. Verwendung der Kobaltmetallagglomerate gemäß einem oder mehreren der Ansprüche 1 bis 6 zur Herstellung von Verbundsinterkörpern auf Basis von Kobaltmetall und Hartstoffen aus der Gruppe Diamant, CBN, WC, SiC und Al₂O₃.

9. Verwendung der Kobaltmetallagglomerate gemäß einem oder mehreren der Ansprüche 1 bis 6 als Komponente zur Herstellung der positiven Elektroden in alkalischen Sekundärbatterien, basierend auf Nickel-Cadmium- oder Nickel-Metallhydrid-Technologien.

## Claims

1. Cobalt metal agglomerates having a spherical secondary structure with an average agglomerate diameter of 3 to 50 µm, consisting of peanut-shaped primary particles which have average particles sizes within the range from 0.1 to 0.7 µm.

2. Cobalt metal agglomerates according to claim 1, characterised in that the agglomerate diameters range from 5 to 20 µm.

3. Cobalt metal agglomerates according to claims 1 or 2, characterised in that they have a specific surface within the range from 2 to 6 m²/g.

4. A method of producing cobalt metal agglomerates according to one or more of claims 1 to 3, characterised in that cobalt salts of general formula CoX₂, wherein X denotes Cl, NO₃ and/or 1/2 SO₄²⁻, are continuously reacted with aqueous solutions or suspensions of alkali- and/or ammonium carbonates and/or -hydrogen carbonates at temperatures between 40 and 100°C, preferably between 60 and 90°C, to form basic cobalt carbonate, the latter is separated and washed until it is neutral and free from salts and is subsequently reacted with caustic alkali and/or ammonium hydroxide solutions, is oxidised by means of oxidising agents to form trivalent heterogenite, CoO(OH), and the latter is reduced by reducing agents to form cobalt metal agglomerates.

5. A method according to claim 4, characterised in that H₂O₂ is preferably used as an oxidising agent.

6. A method according to claims 4 or 5, characterised in that reaction is effected with gaseous reducing agents at temperatures between 300 and 800°C, preferably at 350 to 650°C.

7. Use of cobalt metal agglomerates according to one or more of claims 1 to 6 for the production of sintered cobalt bodies.

8. Use of cobalt metal agglomerates according to one or more of claims 1 to 6 for the production of composite sintered bodies based on cobalt metal and hard materials from the group comprising diamond, CBN, WC. SiC and Al₂O₃.

9. Use of cobalt metal agglomerates according to one or more of claims 1 to 6 as a component for the production of positive electrodes in alkaline secondary batteries based on nickel-cadmium or nickel-metal hydride technologies.

## Revendications

1. Agglomérats de métal de cobalt présentant une structure secondaire sphérique avec un diamètre moyen d'agglomérat de 3 à 50 µm constitués de particules primaires en forme de cacahuètes qui présentent des tailles moyennes de particules dans le domaine de 0,1 à 0,7 µm.

2. Agglomérats de métal de cobalt selon la revendication 1, caractérisés en ce que les diamètres des agglomérats sont compris entre 5 et 20 µm.

3. Agglomérats de métal de cobalt selon la revendication 1 ou 2, caractérisés en ce qu'ils présentent une surface spécifique dans le domaine de 2 à 6 m²/g.

4. Procédé pour la préparation des agglomérats de métal de cobalt selon l'une ou plusieurs des revendications 1 à 3, caractérisé en ce que l'on fait réagir des sels de cobalt de la formule générale CoX₂, où X⁻ = Cl⁻, NO₃⁻ et/ou ½ SO₄²⁻, en continu avec des solutions ou des suspensions aqueuses de carbonates et/ou d'hydrogénocarbonates d'alcalis et/ou d'ammonium à des températures comprises entre 40 et 100°C, de préférence entre 60 et 90°C, en formant du carbonate de cobalt basique, on sépare celui-ci et on le lave jusqu'à ce qu'il soit un sel neutre, on le fait finalement réagir avec des suspensions d'alcalis et/ou d'ammonium, on l'oxyde à l'aide d'un agent d'oxydation en hétérogénite trivalente CoO(OH) et on réduit celle-ci avec des agents de réduction en agglomérats de métal de cobalt.

5. Procédé selon la revendication 4, caractérisé en ce que l'on utilise de préférence comme agent d'oxydation H₂O₂.

6. Procédé selon la revendication 4 ou 5, caractérisé en ce que l'on réalise la réaction avec des agents de réduction gazeux à des températures comprises entre 300 et 800°C, de préférence entre 350 et 650°C.

7. Utilisation des agglomérats de métal de cobalt selon l'une ou plusieurs quelconques des revendications 1 à 6 pour la préparation de corps frittés de cobalt.

8. Utilisation des agglomérats de métal de cobalt selon l'une ou plusieurs quelconques des revendications 1 à 6 pour la préparation de corps composites frittés à base de métal de cobalt et de matériaux de résistance très élevée choisis parmi le diamant, CBN, WC, SiC et Al₂O₃.

9. Utilisation des agglomérats de métal de cobalt selon l'une ou plusieurs quelconques des revendications 1 à 6 comme constituants pour la préparation des électrodes positives dans des accumulateurs secondaires alcalins basés sur les technologies de nickel-cadmium ou de nickel-hydrures de métaux.
